# EUROPÄISCHE PATENTSCHRIFT

(11) **EP 1 472 184 B1**
(45) Veröffentlichungstag und Bekanntmachung des Hinweises auf die Patenterteilung: **11.01.2006**
(21) Anmeldenummer: 03704217.3
(22) Anmeldetag: 17.01.2003
(51) Int. Cl.: C01B 33/033

(54) **VERFAHREN ZUR HERSTELLUNG VON SILICIUM**
METHOD FOR PRODUCING SILICON
PROCEDE DE PRODUCTION DE SILICIUM

(30) Priorität: 18.01.2002 DE 10201772; 17.04.2002 DE 10217125
(43) Veröffentlichungstag der Anmeldung: 03.11.2004
(73) Patentinhaber: Wacker-Chemie GmbH, 81737 München (DE); DOW CORNING CORPORATION, Auburn, MI 48611 (US)
(72) Erfinder: AUNER, Norbert, 60439 Frankfurt am Main (DE)
(74) Vertreter: Hauck, Graalfs, Wehnert, Döring, Siemons
(86) Internationale Anmeldenummer: PCT/DE2003/000115
(87) Internationale Veröffentlichungsnummer: WO 2003/059814

(56) Entgegenhaltungen:
- US-A- 4 102 765
- US-A- 4 382 071
- US-A- 4 753 783

## Beschreibung

Die vorliegende Erfindung betrifft ein Verfahren zur Herstellung von Silicium.

Es ist bekannt, Silicium durch Metallothermie, d. h. durch Reduktion des Dioxids (oder von Si-Halogeniden) mit Magnesium oder Aluminium, herzustellen. In der Technik reduziert man Quarz oder Quarzite mit Hilfe von Kohle in elektrischen Lichtbogenöfen. Reines Silicium wird nach Reduktion von Chlorsilanen mittels H₂ u.a. durch Zonenschmelzen oder verschiedene Verfahren der Einkristall-Züchtung erhalten. Ferner ist die Herstellung von elementarem Silicium durch Reduktion von Siliciumtetrafluorid mit metallischem Kalium bekannt.

In der deutschen Patentanmeldung 101 21 477.4 wurde bereits die Umsetzung von SiO₂ und/oder Silikaten einschließlich Fluorosilikaten mit Flussäure zu SiF₄ und hieraus die Gewinnung von Si vorgeschlagen. Bei diesem Verfahren können sämtliche SiO₂-Quellen eingesetzt werden, wobei die verunreinigungen nicht stören, da eine "Selbstreinigung" durch SiF₄-Kondensation stattfindet. Aus dem gewonnenen SiF₄ kann Si vorzugsweise thermolytisch, katalytisch oder durch Metallreduktion erzeugt werden.

Ferner wird in dieser Veröffentlichung die Reduktion von SiO₂ und/oder Silikaten mit Kohlenstoff zu Si und die elektrolytische Umsetzung von SiO₂ und/oder Silikaten zur Gewinnung von Si vorgeschlagen.

Der vorliegenden Erfindung liegt die Aufgabe zugrunde, ein Verfahren zur Herstellung von Silicium anzugeben, das einen in sich geschlossenen Produktionsprozeß darstellt, bei dem möglichst wenig Nebenprodukte anfallen und bei dem die für die Umsetzung benötigten Reaktionsteilnehmer weitgehend aus den Edukten des Verfahrens gewonnen werden.

Diese Aufgabe wird erfindungsgemäß durch ein Verfahren mit den folgenden Schritten gelöst:
a. Umsetzen von SiO₂ oder Silikaten mit Fluorwasserstoff oder einem Fluorid eines Metalls der Gruppe I oder II des Periodensystems zu SiF₄ unter Freisetzung von H₂O;
b. Umsetzen des gemäß Schritt a. erhaltenen SiF₄ mit einem Metall der Gruppe I und II des Periodensystems zu Si und einem Metallfluorid;
c. Aufspalten des gemäß Schritt b. gewonnenen Metallfluorids mit Schwefelsäure zu HF und einem Metallsulfat;
d. Verwenden des gemäß Schritt c. erhaltenen HF in Schritt a. zur Gewinnung von SiF₄; und
e. Umsetzten des gemäß c. erhaltenen Metallsulfates zu Metall, das als Metall in Schritt b. eingesetzt wird, sowie zu Schwefelsäure, die in Schritt c. eingesetzt wird.

Man erkennt ohne weiteres, daß bei dem erfindungsgemäßen Verfahren die für die Umsetzung von SiO₂ zu Si benötigten Substanzen Fluorwasserstoff (HF) und Metall der Gruppe I oder II sowie die zum Aufspalten des gemäß Schritt b. gewonnenen Metallfluorids benötigte Schwefelsäure aus den Produkten des Verfahrens selbst gewonnen werden. Es liegt somit ein in sich geschlossener Produktionsprozeß (Kreislauf) vor, bei dem (eine weitere Aufarbeitung von entstehenden Nebenprodukten gemäß speziellen Ausführungsformen des erfindungsgemäßen Verfahrens vorausgesetzt) keine Nebenprodukte anfallen und sämtliche Edukte im Recyclingverfahren zurückgewonnen werden, wenn man quantitative Ausbeuten der einzelnen Reaktionen voraussetzt und Aufarbeitungsverluste nicht berücksichtigt.

Das für die Herstellung von Si benötigte Basismaterial SiO₂ (Siliciumdioxid) kann aus auf der Erde vorhandenen SiO₂₋Quellen (insbesondere Wüstensand, Meersand) bereitgestellt werden. Dieser Sand, der weitgehend aus SiO₂ besteht, wird gemäß der 1. Alternative direkt mit Fluorwasserstoff (HF) (extern) umgesetzt, wobei SiF₄ (Siliciumtetrafluorid) durch Zusatz von Schwefelsäure zur entstehenden Hexafluorokieselsäure (H₂SiF₆) ausgetrieben wird. 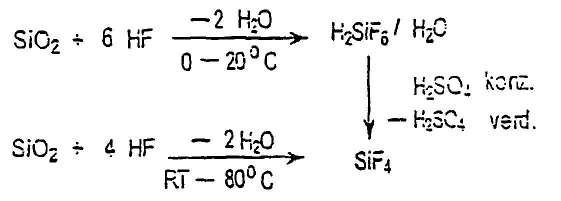
SiO₂ wird mit HF gemischt, und H₂SO₄ wird unter Rühren eingetropft. Je nach Zugabegeschwindigkeit entsteht zwischen 0°C und Raumtemperatur SiF₄. Durch eine Temperaturerhöhung auf ca. 80°C wird der SiF₄-Austrieb aus einem Vorratsgefäß vervollständigt. Das gewonnene SiF₄ fällt als farbloses Gas an, das durch Umkondensation oberhalb seines Sublimationspunktes (-95,5°C) weiter aufgereinigt werden kann. Alle die sich aus den Verunreinigungen des Sandes (SiO₂) ergebenden Alkali-, Erdalkali-, Al-Fluoride u.a. bleiben als feste Produkte der HF-Umsetzung zurück bzw. reagieren mit zugesetzter H₂SO₄ zu den Sulfaten und können als Feststoffe abgetrennt werden (können nach Aufarbeitung produktspezifischen Verwendungen zugeführt werden).

Bei der 2. Alternative wird Sand (SiO₂) mit einem Fluorid eines Metalls der Gruppe I oder II, vorzugsweise einem Alkalimetallfluorid (AF), insbesondere Natriumfluorid, gemischt, und es wird Schwefelsäure zugetropft (in situ-Verfahren). Dabei entsteht der HF in situ und reagiert mit dem SiO₂ sofort zum SiF₄ und Metallsulfat, vorzugsweise Alkalimetallsulfat, insbesondere Natriumsulfat, ab.

Was Schritt b. des erfindungsgemäßen Verfahren anbetrifft, so kann hier das Metall der Gruppe I oder II des Periodensystems in fester oder flüssiger Form eingesetzt werden, oder es wird in der Gasphase gearbeitet. Eine weitere Alternative sieht vor, daß man gemäß Schritt b. in Lösung umsetzt.

Bei einer speziellen Ausführungsform wird in Schritt b. des erfindungsgemäßen Verfahrens das gewonnene SiF₄ nach "Selbstreinigung" in einem Reaktor (Drehreaktor, Dünnschichtverdampfer, Gegenstromverfahren) mit blankem Metall, vorzugsweise Alkalimetall (A), insbesondere Natrium, oder mit Metalldampf (vorzugsweise Alkalimetalldampf, insbesondere Natriumdampf) unter Sauerstoffausschluß und Wasserausschluß zur Reaktion gebracht(mitunter unter Flammenerscheinung). Dabei wählt man je nach Ansatzgrößen folgende Bedingungen:

Für kleinere Ansätze in einer Flüssig/Gas-Reaktion (flüssiges Natrium, gasförmiges SiF₄) Drücke zwischen 350 und 760 Torr bei Reaktionstemperaturen zwischen 150 und 250°C. Dabei steigt die Reaktionstemperatur auf ca. 900°C an. Technische Anlagen werden zwischen 500 und 1000°C (Dampf/Dampf-Reaktion) gefahren. Dabei entstehen graubraunes, fein pulverisiertes amorphes Silicium und Natriumfluorid. Durch Aufschmelzen der Reaktionsmischung auf ca. 1000°C (Smp. NaF 993°C) und Abpressen bzw. Zentrifugieren von geschmolzenem Natriumfluorid oder Auswaschen mit Wasser werden das Alkalifluorid (Natriumfluorid, stark wasserlöslich) und das Si-Pulver (nicht wasserlöslich) getrennt, ggf. wird auch leicht sauer aufgearbeitet. Von der Lösung wird Wasser abdestilliert (oder unter Vakuum abkondensiert), und es bleibt festes Alkalimetallfluorid (Natriumfluorid) zurück. Das Si-Pulver wird getrocknet und der weiteren Verwendung zugeführt, je nach Verwendungszweck ggf. weiter aufgereinigt.

Wenn man gemäß Schritt b. in Lösung umsetzt, wird vorzugsweise ein apolares Lösungsmittel eingesetzt.

Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloße Dispersionsmittel umfassen.Ein "apolares oder unpolares" Lösungsmittel weist keine polare Gruppen oder funktionelle Gruppen auf, deren charakteristische Elektronenverteilungen dem Molekül ein beträchtliches elektrisches Dipolmoment erteilen, so daß solche Gruppen die Affinität zu anderen polaren chemischen Verbindungen bedingen.

Erfindungsgemäß wurde festgestellt, daß durch Einsatz eines apolaren Lösungsmittels im vorstehend angegebenen Reduktionsverfahren reines amorphes Silicium erhalten wird, das eine schwarze Farbe besitzt. Dieses amorphe Silicium ist nicht "oberflächenbelegt" und zeichnet sich durch ein besonders hohes Reaktionsvermögen aus. Dies steht im Gegensatz zu dem auf herkömmliche Weise gewonnenen amorphen Silicium, das als braunes Pulver anfällt und, wie Untersuchungen gezeigt haben, "oberflächenbelegt" ist, beispielsweise mit Cl, Silylchlorid oder O₂ oder HO belegt ist.

Vorzugsweise finden organische, nicht koordinierende Lösungsmittel, wie Xylol, Toluol, Verwendung.

Als Metall wird ein Metall der Gruppe I oder II des Periodensystems verwendet. Natrium wird bevorzugt, wobei allerdings auch mit Magnesium gute Ergebnisse erzielt wurden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Metallpulver etc. eingesetzt werden. Wesentlich ist, daß das Metall in einem Zustand mit aktivierter Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96 °C) und unter dem Siedepunkt des eingesetzten apolaren Lösungsmittels gearbeitet. Es kann auch bei erhöhten Drücken gearbeitet werden.

Zweckmäßigerweise wird das erfindungsgemäße Verfahren unter Rückflußbedingungen für das Lösungsmittel durchgeführt.

Bei dem erfindungsgemäßen Verfahren fällt das unbelegte amorphe Silicium im Gemisch mit einem Metallfluorid an. Bereits dieses Gemisch besitzt in bezug auf das amorphe Silicium eine sehr hohe Reaktivität, so daß es für die gewünschten weiteren Reaktionen eingesetzt werden kann. Das amorphe Silicium kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Aufschmelzen, Abpressen, Zentrifugieren, Sedimentationsverfahren, Flotationsverfahren etc. eingesetzt werden. Als chemisches Verfahren kann ein Auswaschen des amorphen Siliciums mit einem Lösungsmittel oder Lösungsmittelgemisch, welches das Metallhalogenid löst, aber nicht irreversibel mit dem Silicium reagiert, durchgeführt werden. Beispielsweise wird mit flüssigem Ammoniak ein mit Ammoniak belegtes Silicium gewonnen, wobei durch Abpumpen des Ammoniaks das gewünschte reine amorphe Silicium schwarzer Farbe dargestellt werden kann.

Die Reaktionstemperatur oberhalb des Metall-Schmelzpunktes gilt nicht für z.B. Na-Staub, welcher auch bei Raumtemperatur reagiert. Die Reaktionstemperatur unterhalb des Siedepunktes sollte nur für gasförmige Silane eingehalten werden, um einen ausreichenden Partialdruck des Silans über der Dispersion zu gewährleisten und somit vertretbare Reaktionszeiten zu erreichen.

Bei dem erfindungsgemäßen Verfahren wird des weiteren das gemäß Schritt b. gewonnene Metallfluorid, vorzugsweise Alkalimetallfluorid AF, insbesondere NaF, mit Schwefelsäure zu HF und einem Metallsulfat, vorzugsweise A₂SO₄, insbesondere Natriumsulfat, aufgespalten. Der bei diesem Verfahren gewonnene HF wird wieder in den Kreislauf eingebracht und in Schritt a. des erfindungsgemäßen Verfahrens zur Gewinnung von SiF₄ eingesetzt.

Somit wird aus dem Metallfluorid, vorzugsweise Alkalimetallfluorid, durch Umsetzung mit Schwefelsäure der Fluorwasserstoff zurückgewonnen:

2 AF + H₂SO₄ → A₂SO₄ + 2 HF,

insbesondere

2 NaF + H₂SO₄ → Na₂SO₄ + 2 HF.

Dazu wird festes Metallfluorid (Alkalimetallfluorid) vorgelegt, und es wird konzentrierte Schwefelsäure unter Rühren zugetropft. Dabei entweicht gasförmiger HF und wird über einen Kühler auskondensiert. Festes Metallsulfat (Alkalimetallsulfat) bleibt zurück, und HF wird wieder in den Kreislauf eingebracht.

In Schritt e. des erfindungsgemäßen Verfahrens wird das gemäß Schritt c. erhaltene Metallsulfat zu Metall, das als Metall in Schritt b. eingesetzt wird, sowie zu Schwefelsäure, die in Schritt c. eingesetzt wird, umgesetzt. Vorzugsweise wird dabei das gemäß Schritt c. erhaltene A₂SO₄ zu ACl und Erdalkalimetallsulfat umgesetzt, wobei dies vorzugsweise mit Hilfe eines Erdalkalimetallchlorides geschieht. Aus dem gewonnen ACl wird A, vorzugsweise Na, erhalten, das als Alkalimetall (A) in Schritt b. des erfindungsgemäßen Verfahrens eingesetzt wird. Ferner wird aus dem Erdalkalimetallsulfat Schwefelsäure gewonnen, die in Schritt e. des erfindungsgemäßen Verfahrens eingesetzt wird. Dieser Verfahrensteil wird später im einzelnen erläutert.

Vorzugsweise wird das gebildete Alkalimetallsulfat als wäßrige Lösung mit wäßriger Calciumchloridlösung umgesetzt. Schwer lösliches Calciumsulfat (Gips) fällt aus, und Kochsalz bleibt in Lösung. Insbesondere findet folgende Reaktion statt:

Na₂SO₄ + CaCl₂ → CaSO₄ + 2 NaCl

Feststoff und Lösung werden durch physikalische Trennverfahren, insbesondere Filtration, voneinander getrennt.

Vorzugsweise wird das gemäß Schritt a. des erfindungsgemäßen Verfahrens erzeugte Wasser elektrolytisch in O₂ und H₂ aufgespalten, und der gewonnene H₂ wird zur Herstellung von HCl (Chlorwasserstoff) eingesetzt, der mit einem Erdalkalimetalloxid zum Erdalkalimetallchlorid umgesetzt wird, das mit dem gemäß Schritt e. erhaltenen A₂SO₄ zur ACl-Gewinnung verwendet wird.

Das erhaltene ACl, vorzugsweise NaCl (Kochsalzlösung), wird durch Destillation/Kondensation von Wasser befreit, und festes ACl, insbesondere NaCl, wird in der Schmelze der herkömmlichen Chlor-Alkali-Elektrolyse unterzogen:

2 NaCl → 2 Na + Cl₂

Damit wird das Alkalimetall (Natrium) für die SiF₄₋Reduktion gemäß Schritt b. des erfindungsgemäßen Verfahrens wieder in den Kreislauf eingebracht.

Die gemäß Schritt c. des erfindungsgemäßen Verfahrens verwendete Schwefelsäure wird vorzugsweise durch Umsetzung des gemäß Schritt e. erhaltenen A₂SO₄ mit einem Erdalkalichlorid gewonnen, und das Erdalkalimetallsulfat wird in SO₂ und O₂ aufgespalten, und diese beiden Bestandteile werden mit Wasser zu Schwefelsäure umgesetzt. Wie erwähnt, wird vorzugsweise Calcium als Erdalkalimetall verwendet. Dabei wird Calciumsulfat bei Temperaturen oberhalb 800°C in Ca-Oxid und SO₃ bzw. SO₂/O₂ zersetzt:

CaSO₄ → CaO + SO₃ → CaO + SO₂ + ½ O₂

Die Mischung SO₂/O₂ wird nach dem Bleikammer- oder Kontaktverfahren in herkömmlicher Technologie zur Schwefelsäure aufgearbeitet:

SO₂/O₂ + H₂O → H₂SO₄

Das vorstehend erhaltene Erdalkalimetalloxid bzw. -hydroxid, insbesondere Calciumoxid bzw. Calciumhydroxid, wird mit wäßriger Salzsäurelösung zum Erdalkalimetallchlorid, insbesondere Calciumchlorid, umgesetzt. Das Erdalkalimetallchlorid wird dann in der vorstehend beschriebenen Weise wieder im Prozeß verwendet. Die benötigte Salzsäure wird in herkömmlicher Technologie aus dem bei der Chlor-Alkali-Elektrolyse gewonnenen Chlorgas und Wasserstoff erzeugt.

H₂ + Cl₂ → 2 HCl

Der dazu benötigte Wasserstoff wird von außen in den Prozeß eingebracht und kann beispielsweise aus der elektrolytischen Wasserzerlegung des gemäß Schritt a. des erfindungsgemäßen Verfahrens erzeugten Prozeßwassers gewonnen werden:

SiO₂ + 4 HF → SiF₄ + 2 H₂O.

Vorzugsweise ist das erfindungsgemäße Verfahren als Gesamtprozeß ausgebildet, der in der folgenden Darstellung A gezeigt ist.

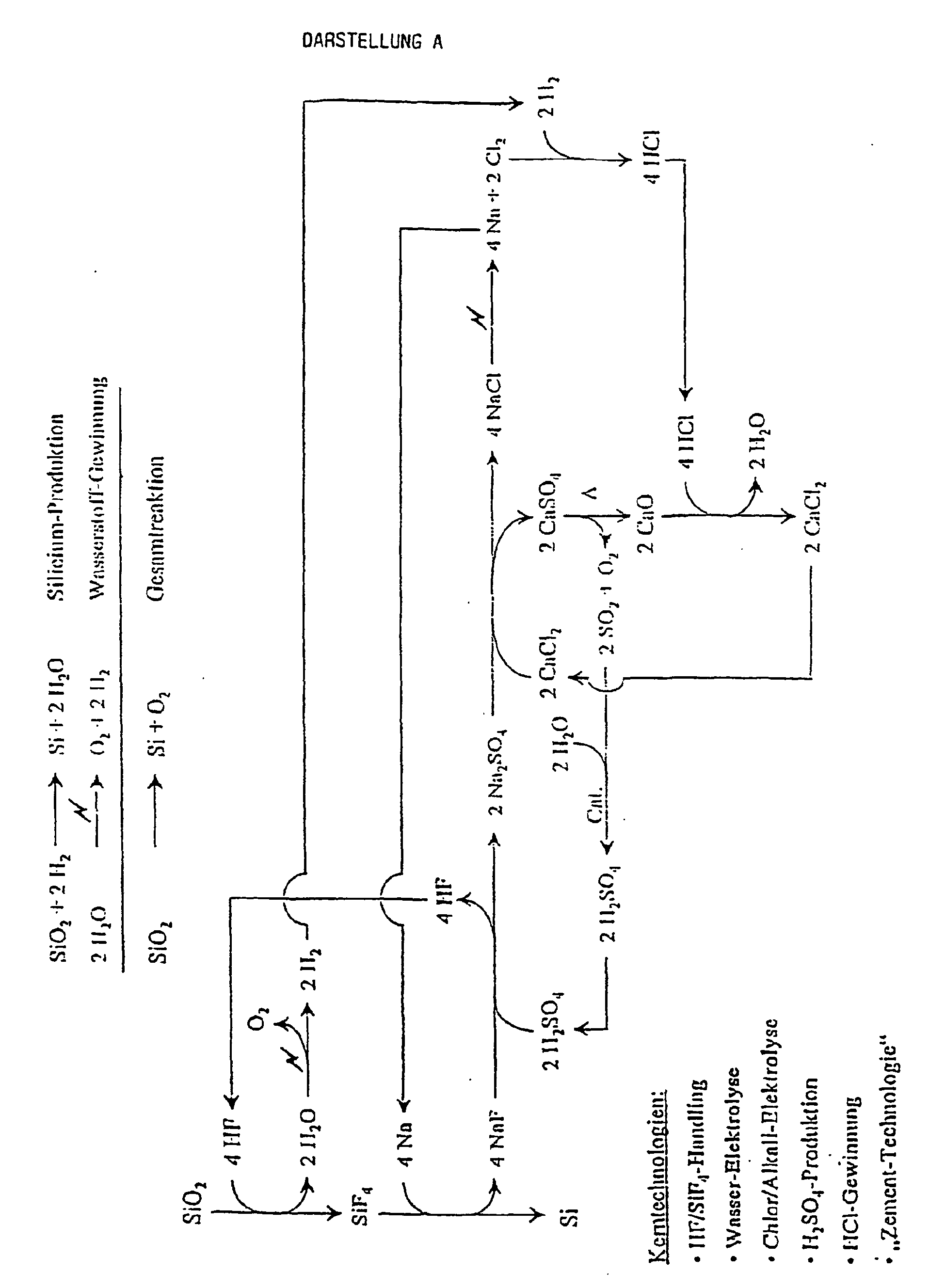

Durch diesen Prozeß wird zusammenfassend die technisch nicht verifizierte Reduktion des SiO₂ mit Wasserstoff realisiert. Die SiO₂-Elektrolysen, die prozeßtechnisch (noch) nicht durchführbar sind, werden auf die großtechnisch ausgereifte Chlor-Alkali-Elektrolyse zurückgeführt. Dadurch wird (neben der katalytischen H₂SO₄-Darstellung) die für den Gesamtprozeß benötigte elektrische Energie zugeführt. Da der Downs-Prozeß (Downs-Zelle: Stahlbehälter, Graphit-Anode, Eisenkathode, Spannung ca. 7 V, Stromausbeute ca. 90%, Reaktionstemperaturen ca. 600 - 800°C, 10 - 11 kWh pro kg Na) unter moderaten Bedingungen abläuft, können elektrische und chemische Energien ggf. auch photovoltaisch bzw. solarthermisch unter Nutzung erneuerbarer Energien zugeführt werden. Gleiches gilt für die vorlaufend erwähnte Wasserelektrolyse.

Der Gesamtprozeß läuft auch unter Verwendung von Kalium anstelle von Natrium (bei ca. Raumtemperatur bis 80°C zur SiF₄-Reduktion) ab. Jedoch ist Kalium teurer, und es muß ein weiterer Reaktionsschritt KCl + Na → NaCl + K in den Kreislauf eingeführt werden. Der Vorteil hier: Aus der Reaktion von Kochsalz mit CaCO₃ läßt sich großtechnisch interessantes Soda als Nebenprodukt produzieren. 2 NaCl + Ca-CO₃ → Na₂CO₃ + CaCl₂. Ca-Chlorid wird in den Prozeß zurückgeführt.

Mit diesem Prozeß wird "solar-grade", amorphes Siliciumpulver gewonnen, das zur Erzeugung von Siliciumnitrid und hochdisperser Kieselsäure Verwendung finden kann. Durch gezielte Kristallisation wird Halbleiter-Silicium zugänglich. Der Einsatz zur Müller-Rochow-Synthese ist vorteilhaft. Selbstverständlich kann dieses so produzierte Silicium auch als "Energieträger und Energiespeicher" eingesetzt werden.

Der erfindungsgemäße Gesamtprozeß hat den weiteren Vorteil, daß man in den einzelnen Verfahrensstufen auf bekannte und bewährte Kerntechnologien zurückgreifen kann, nämlich:
HF/SiF₄-Handling
Wasser-Elektrolyse
Chlor/Alkali-Elektrolyse
H₂SO₄-Produktion
HCl-Gewinnung
Zement-Technologie.

Insbesondere durch die Umsetzung von Na₂SO₄ mit CaCl₂ zu Kochsalz gelangt man zu der bewährten Chlor/Alkali-Elektrolyse.

Mit dem erfindungsgemäßen Verfahren läßt sich nicht nur amorphes Silicium, sondern auch kristallines Silicium (polykristallines Silicium) herstellen, wenn entsprechend hohe Temperaturen zur Anwendung gelangen, die beispielsweise über 1400 °C liegen.

Es läßt sich hochreines Silicium herstellen, wobei der Reinheitsgrad durch die Reinheit des zur Reduktion eingesetzten Metalls und des gewonnenen Siliciumtetrafluorides(SiF₄) bestimmt wird. Bei der Gewinnung von hochreinem Silicium können für entsprechende Folgeprozesse (Aufschmelzen und Überführen in Si für Solar- oder Photovoltaik- Anwendungen, Halbleiter-Silicium) entsprechende Reinigungsverfahren entfallen.

Ein weiteres bevorzugtes Reduktionsmetall für Schritt a. ist Magnesium.

## Patentansprüche

1. Verfahren zur Herstellung von Silicium mit den folgenden Schritten:
a. Umsetzen von SiO₂ oder Silikaten mit Fluorwasserstoff oder einem Fluorid eines Metalls der Gruppe I oder II des Periodensystems zu SiF₄ unter Freisetzung von H₂O;
b. Umsetzen des gemäß Schritt a. erhaltenen SiF₄ mit einem Metall der Gruppe I oder II des Periodensystems zu Si und einem Metallfluorid;
c. Aufspalten des gemäß b. gewonnenen Metallfluorids mit Schwefelsäure zu HF und einem Metallsulfat;
d. Verwenden des gemäß Schritt c. erhaltenen HF in Schritt a. zur Gewinnung von SiF₄; und
e. Umsetzen des gemäß Schritt c. erhaltenen Metallsulfates zu Metall, das als Metall in Schritt b. eingesetzt wird, sowie zu Schwefelsäure, die in Schritt c. eingesetzt wird.

2. Verfahren nach Anspruch 1, **dadurch gekennzeichnet, dass** man gemäß Schritt a. SiO₂ oder Silikate mit Schwefelsäure umsetzt.

3. Verfahren nach Anspruch 1 oder 2, **dadurch gekennzeichnet, dass** man das gemäß Schritt a. erhaltene SiF₄ mit einem Alkalimetall (A) zu Si und AF umsetzt.

4. Verfahren nach Anspruch 3, **dadurch gekennzeichnet, dass** man das gemäß Schritt c. erhaltene A₂SO₄ zu ACl und Erdalkalimetallsulfat umsetzt und A aus ACl, das als Alkalimetall (A) in Schritt b. eingesetzt wird, sowie Schwefelsäure aus dem Erdalakalimetallsulfat, die in Schritt c. eingesetzt wird, gewinnt.

5. Verfahren nach einem der vorangehenden Ansprüchen, **dadurch gekennzeichnet, dass** man gemäß Schritt b. in der Gasphase arbeitet.

6. Verfahren nach einem der Ansprüche 1 bis 4, **dadurch gekennzeichnet, dass** man gemäß Schritt b. in Lösung umsetzt.

7. Verfahren nach Anspruch 6, **dadurch gekennzeichnet, dass** als Lösungsmittel ein apolares Lösungsmittel eingesetzt wird.

8. Verfahren nach Anspruch 6 oder 7, **dadurch gekennzeichnet, dass** das Metall im Lösungsmittel aufgeschmolzen wird.

9. Verfahren nach einem der vorangehenden Ansprüche, **dadurch gekennzeichnet, dass** man das gemäß Schritt a. erzeugte Wasser elektrolytisch in O₂ und H₂ aufspaltet.

10. Verfahren nach Anspruch 9, **dadurch gekennzeichnet, dass** man den gewonnenen H₂ zur Herstellung von HCl (Chlorwasserstoff) einsetzt, der mit einem Erdalkalimetalloxid zum Erdalkalimetallchlorid umgesetzt wird, das mit dem gemäß Schritt e. erhaltenen Metallsulfat zur Metallchloridgewinnung verwendet wird.

11. Verfahren nach einem der vorangehenden Ansprüche, **dadurch gekennzeichnet, dass** man die gemäß Schritt c. verwendete Schwefelsäure durch Umsetzung des gemäß Schritt e. erhaltenen Metallsulfates mit einem Erdalkalimetallchlorid zu einem Erdalkalimetallsulfat und Aufspalten des Erdalkalimetallsulfates in ein Erdalkalimetalloxid und SO₂ und O₂ sowie Umsetzung von SO₂ und O₂ mit Wasser herstellt.

12. Verfahren nach Anspruch 11, **dadurch gekennzeichnet, dass** das Erdalkalimetall Calcium ist.

13. Verfahren nach einem der vorangehenden Ansprüche, **dadurch gekennzeichnet, dass** man das gemäß Schritt e. erhaltene Metallsulfat mit einem Erdalkalimetallchlorid zu einem Erdalkalimetallsulfat umsetzt und dass bei dieser Reaktion entstandene Metallchlorid einer Chlor-Metall- Elektrolyse zum Erhalt des Metalls, insbesondere Alkalimetalls (A), und von Chlor unterzieht.

14. Verfahren nach einem der Ansprüche 3 bis 13, **dadurch gekennzeichnet, dass** als Alkalimetall (A) Natrium eingesetzt wird.

15. Verfahren nach Anspruch 13, **dadurch gekennzeichnet, dass** man das erhaltene Erdalkalimetallsulfat zum Erdalkalimetalloxid umsetzt und das erhaltene Erdalkalimetalloxid mit HCl unter Freisetzung von H₂O zum Erdalkalichlorid reagieren lässt, das mit dem gemäß Schritt e. erhaltenen Metallsulfat umgesetzt wird.

16. Verfahren nach einem der vorangehenden Ansprüche, **dadurch gekennzeichnet, dass** es zum Herstellen von amorphem Silicium eingesetzt wird.

## Claims

1. A method for producing silicon comprising the following steps:
a. reacting SiO₂ or silicates with hydrogen fluoride or a fluoride of a metal of group I or II of the periodic system to obtain SiF₄ with setting free H₂O;
b. reacting the SiF₄ obtained according to step a. with a metal of group I or II of the periodic system to obtain Si and a metal fluoride;
c. splitting up the metal fluoride obtained according to b. with sulfuric acid to obtain HF and a metal sulfate;
d. using the HF obtained according to step c. in step a. for the production of SiF₄; and
e. reacting the metal sulfate obtained according to step c. to obtain metal which is used as metal in step b. and to obtain sulfuric acid which is used in step c.

2. The method according to claim 1, **characterized in that** according to step a. SiO₂ or silicates are reacted with sulfuric acid.

3. The method according to claim 1 or 2, **characterized in that** the SiF₄ obtained according to step a. is reacted with an alkali metal (A) to obtain Si and AF.

4. The method according to claim 3, **characterized in that** the A₂SO₄ obtained according to step c. is reacted to obtain ACl and alkaline earth metal sulfate and A, which is used as alkali metal (A) in step b., is produced from ACl as well as sulfuric acid, which is used in step c., is produced from the alkaline earth metal sulfate.

5. The method according to one of the preceding claims, **characterized in that** according to step b. it is worked in the gaseous phase.

6. The method according to one of the claims 1 to 4, **characterized in that** according to step b. it is reacted in solution.

7. The method according to claim 6, **characterized in that** an apolar solvent is used as solvent.

8. The method according to claim 6 or 7, **characterized in that** the metal is melted within the solvent.

9. The method according to one of the preceding claims, **characterized in that** the water produced according to step a. is electrolytically split up to obtain O₂ and H₂.

10. The method according to claim 9, **characterized in that** the produced H₂ is used for the production of HCl (hydrogen chloride) which is reacted with an alkaline earth metal oxide to obtain alkaline earth metal chloride which is used with the metal sulfate obtained according to step e. for the production of metal chloride.

11. The method according to one of the preceding claims, **characterized in that** the sulfuric acid used according to step c. is produced by reacting the metal sulfate obtained according to step e. with an alkaline earth metal chloride to obtain an alkaline earth metal sulfate and by splitting up the alkaline earth metal sulfate into an alkaline earth metal oxide and SO₂ and O₂ as well as by reacting SO₂ and O₂ with water.

12. The method according to claim 11, **characterized in that** the alkaline earth metal is calcium.

13. The method according to one of the preceding claims, **characterized in that** the metal sulfate obtained according to step e. is reacted with an alkaline earth metal chloride to obtain an alkaline earth metal sulfate and the metal chloride obtained by this reaction is subjected to a chlorine-metal electrolysis to obtain the metal, especially the alkali metal (A), and to obtain chlorine.

14. The method according to one of the claims 3 to 13, **characterized in that** sodium is used as alkali metal (A).

15. The method according to claim 13, **characterized in that** the obtained alkaline earth metal sulfate is reacted to obtain alkaline earth metal oxide and the obtained alkaline earth metal oxide is reacted with HCl to obtain alkaline earth metal chloride with setting free H₂O, the alkaline earth metal chloride being reacted with the metal sulfate obtained according to step e.

16. The method according to one of the preceding claims, **characterized in that** it is used for the production of amorphous silicon.

## Revendications

1. Procédé de production de silicium comprenant les étapes suivantes :
a. réaction de SiO₂ ou de silicates avec du fluorure d'hydrogène ou un fluorure d'un métal du groupe I ou II du système périodique pour former du SiF₄ en libérant du H₂O;
b. réaction du SiF₄ obtenu à l'étape a. avec un métal du groupe I ou II du système périodique pour former du Si et un fluorure de métal;
c. séparation du fluorure de métal obtenu à l'étape b. avec de l'acide sulfurique pour former du HF et un sulfate de métal;
d. utilisation à l'étape a. du HF obtenu à l'étape c. pour produire du SiF₄; et
e. conversion du sulfate de métal obtenu à l'étape c. en métal, qui est utilisé comme métal à l'étape b., ainsi qu'en acide sulfurique, qui est utilisé à l'étape *c*.

2. Procédé selon la revendication 1, **caractérisé en ce que** l'on fait réagir à l'étape a. du SiO₂ ou un silicate avec de l'acide sulfurique.

3. Procédé selon la revendication 1 ou 2, **caractérisé en ce que** l'on fait réagir le SiF₄ obtenu à l'étape a. avec un métal alcalin (A) pour former du Si et de l'AF.

4. Procédé selon la revendication 3, **caractérisé en ce que** l'on convertit le A₂SO₄ obtenu à l'étape c. en ACl et en sulfate de métal alcalinoterreux et l'on produit du A à partir du ACl, qui est utilisé comme métal alcalin (A) à l'étape b., ainsi que de l'acide sulfurique à partir du sulfate de métal alcalinoterreux, qui est utilisé à l'étape c.

5. Procédé selon l'une quelconque des revendications précédentes, **caractérisé en ce que** l'on opère en phase gazeuse à l'étape b.

6. Procédé selon l'une quelconque des revendications 1 à 4, **caractérisé en ce que** l'on opère en solution à l'étape b.

7. Procédé selon la revendication 6, **caractérisé en ce que** l'on utilise comme solvant un solvant apolaire.

8. Procédé selon la revendication 6 ou 7, **caractérisé en ce que** le métal est fondu dans le solvant.

9. Procédé selon l'une quelconque des revendications précédentes, **caractérisé en ce que** l'on sépare l'eau produite à l'étape a. par électrolyse en O₂ et H₂.

10. Procédé selon la revendication 9, **caractérisé en ce que** l'on utilise le H₂ produit pour fabriquer du HCl (gaz chlorhydrique), que l'on fait réagir avec un oxyde de métal alcalinoterreux pour obtenir le chlorure de métal alcalinoterreux, qui est utilisé avec le sulfate de métal obtenu à l'étape e. pour produire du chlorure de métal.

11. Procédé selon l'une quelconque des revendications précédentes, **caractérisé en ce que** l'on produit l'acide sulfurique utilisé à l'étape c. par réaction du sulfate de métal obtenu à l'étape e. avec un chlorure de métal alcalinoterreux pour obtenir un sulfate de métal alcalinoterreux et par séparation du sulfate de métal alcalinoterreux en un oxyde de métal alcalinoterreux, en SO₂ et en O₂ ainsi que par réaction de SO₂ et de O₂ avec de l'eau.

12. Procédé selon la revendication 11, **caractérisé en ce que** le métal alcalinoterreux est le calcium.

13. Procédé selon l'une quelconque des revendications précédentes, **caractérisé en ce que** l'on fait réagir le sulfate de métal obtenu à l'étape e. avec un chlorure de métal alcalinoterreux pour obtenir un sulfate de métal alcalinoterreux et **en ce que** l'on soumet le chlorure de métal formé dans cette réaction à une électrolyse de chlore-métal pour l'obtention du métal, en particulier du métal alcalin (A), et de chlore.

14. Procédé selon l'une quelconque des revendications 3 à 13, **caractérisé en ce que** l'on utilise du sodium comme métal alcalin (A).

15. Procédé selon la revendication 13, **caractérisé en ce que** l'on convertit le sulfate de métal alcalinoterreux obtenu en l'oxyde de métal alcalinoterreux et **en ce que** l'on fait réagir l'oxyde de métal alcalinoterreux obtenu avec du HCl en libérant du H₂O pour former le chlorure alcalinoterreux, que l'on fait réagir avec le sulfate de métal obtenu à l'étape e.

16. Procédé selon l'une quelconque des revendications précédentes, **caractérisé en ce qu'**il est utilisé pour produire du silicium amorphe.
